# EUROPEAN PATENT APPLICATION

(11) **EP 4 579 626 A1**
(43) Date of publication of application: **02.07.2025**
(21) Application number: 23857139.2
(22) Date of filing: 02.08.2023
(51) Int. Cl.: G08G 1/015, G06T 7/00, G06T 7/70

(54) **INFORMATION PROCESSING DEVICE, INFORMATION PROCESSING METHOD, AND INFORMATION PROCESSING PROGRAM**

(30) Priority: 25.08.2022 JP 2022134373
(71) Applicant: Kyocera Corporation, Kyoto-shi, Kyoto 612-8501 (JP)
(72) Inventor: ARATA, Koji, Kyoto-shi, Kyoto 612-8501 (JP); HU, Zhiqiang, Kyoto-shi, Kyoto 612-8501 (JP); MIKUNI, Yoshitaka, Kyoto-shi, Kyoto 612-8501 (JP)
(74) Representative: Viering, Jentschura & Partner mbB Patent- und Rechtsanwälte
(86) International application number: PCT/JP2023/028325
(87) International publication number: WO 2024/043024

(57) **Abstract**

An information processing apparatus (200) includes a determiner (242) configured to determine whether a first moving object group identified from a first image captured by a first camera and a second moving object group identified from a second image captured by a second camera are an identical moving object group, and an outputter (243) configured to output installation relationship information identifying an installation relationship between the first camera and the second camera based on a movement mode of the first moving object group and a movement mode of the second moving object group determined to be the identical moving object group.

## Description

### TECHNICAL FIELD

The present application relates to an information processing apparatus, an information processing method, and an information processing program.

### BACKGROUND OF INVENTION

Known cameras installed on roads, roadsides, or the like of the roads perform calibration. Patent Document 1 discloses performing calibration using a measurement vehicle on which a GPS receiver, a data transmitter, a marker, and the like are mounted. Patent document 2 discloses that in camera calibration, when the direction of a line existing on the road plane is input in the captured image, the road plane parameters are estimated based on the direction and a direction represented by an arithmetic equation including the road plane parameters.

### CITATION LIST

### PATENT LITERATURE

Patent Document 1: JP 2012-10036 A
Patent Document 2: JP 2017-129942 A

### SUMMARY

### PROBLEM TO BE SOLVED

Patent Document 1 requires a measuring vehicle and also requires a worker when performing calibration. Patent Document 2 requires manual input of road lanes into the image, which is a time-consuming process. Accordingly, there is a need for systems of the known art that use multiple cameras to estimate the installation state of cameras that capture images of the traffic environment without requiring manual labor or traffic regulation.

### SOLUTION TO PROBLEM

An information processing apparatus according to an aspect includes a determiner configured to determine whether a first moving object group identified from a first image captured by a first camera and a second moving object group identified from a second image captured by a second camera are an identical moving object group, and an outputter configured to output installation relationship information identifying an installation relationship between the first camera and the second camera based on a movement mode of the first moving object group and a movement mode of the second moving object group determined to be the identical moving object group.

An information processing method according to an aspect includes, by a computer, determining whether a first moving object group identified from a first image captured by a first camera and a second moving object group identified from a second image captured by a second camera are an identical moving object group, and outputting installation relationship information identifying an installation relationship between the first camera and the second camera based on a movement mode of the first moving object group and a movement mode of the second moving object group determined to be the identical moving object group.

An information processing program according to an aspect causes a computer to implement determining whether a first moving object group identified from a first image captured by a first camera and a second moving object group identified from a second image captured by a second camera are an identical moving object group, and outputting installation relationship information identifying an installation relationship between the first camera and the second camera based on a movement mode of the first moving object group and a movement mode of the second moving object group determined to be the identical moving object group.

### BRIEF DESCRIPTION OF THE DRAWINGS

FIG. 1 is a diagram for explaining an example of a camera system according to an embodiment.
FIG. 2 schematically illustrates image information captured by a first camera and a second camera illustrated in FIG. 1.
FIG. 3 illustrates an example of a data structure of moving object group information.
FIG. 4 illustrates an example of installation relationship information output from an information processing apparatus.
FIG. 5 illustrates an example of the configuration of a camera illustrated in FIG. 1.
FIG. 6 illustrates an example of the configuration of a learning device according to an embodiment.
FIG. 7 illustrates an example of the configuration of the information processing apparatus according to the embodiment.
FIG. 8 is a flowchart illustrating an example of a processing procedure executed by the camera.
FIG. 9 is a flowchart illustrating an example of a processing procedure executed by the information processing apparatus.
FIG. 10 illustrates an example of an operation of the camera and the information processing apparatus in a camera system.
FIG. 11 illustrates an example of another configuration of the information processing apparatus according to the embodiment.
FIG. 12 is a flowchart illustrating an example of another processing procedure executed by the information processing apparatus.

### DESCRIPTION OF EMBODIMENTS

Embodiments for implementing an information processing apparatus, an information processing method, and an information processing program according to the present application will be described in detail with reference to the drawings. Note that the following description is not intended to limit the present invention. Constituent elements in the following description include those that can be easily assumed by a person skilled in the art, those that are substantially identical to the constituent elements, and those within a so-called range of equivalents. In the following description, the same reference signs may be assigned to the same constituent elements. Redundant description may be omitted.

### System overview

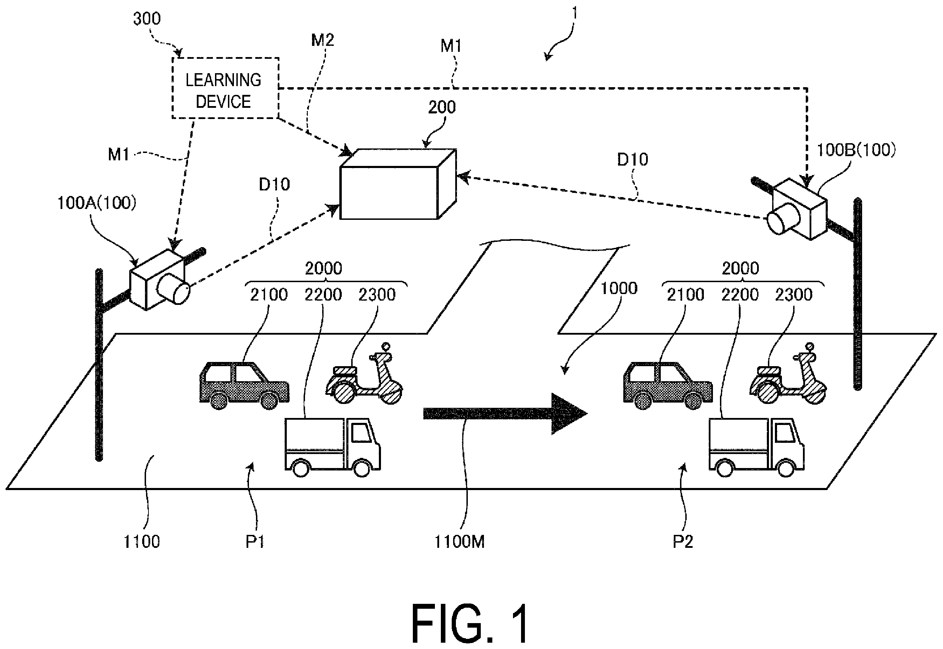

FIG. 1 is a diagram for explaining an example of a camera system according to an embodiment. As illustrated in FIG. 1, a camera system 1 includes a system that monitors a traffic environment 1000 using a plurality of cameras 100 installed in the vicinity of the traffic environment 1000. In the camera system 1, the plurality of cameras 100 are installed such that image capturing areas of the cameras 100 do not overlap each other in order to reduce the number of cameras 100 to be installed. When the camera system 1 is applied to monitoring a road 1100, the cameras 100 are installed to allow capturing of images of moving objects on the road 1100, so that buildings around the road 1100 are often not included in the captured images. The camera system 1 according to the present embodiment provides a function of grasping an installation relationship of the plurality of cameras 100.

The camera system 1 includes the plurality of cameras 100 and an information processing apparatus 200. The plurality of cameras 100 are set at different positions in the traffic environment 1000 to allow capturing of images of the traffic environment 1000 from above. Examples of the traffic environment 1000 include local roads, expressways, toll roads, and the like. The information processing apparatus 200 has a function of acquiring various types of information from each of the plurality of cameras 100 and, based on such information, estimating an installation relationship of the plurality of cameras 100. The plurality of cameras 100 and the information processing apparatus 200 are configured to be communicable with each other via a wired network, a wireless network, or a network of any combination of wired and wireless networks. To simplify the explanation, the camera system 1 is described as including two cameras 100 and one information processing apparatus 200 in the example illustrated in FIG. 1, but the number of cameras 100 and the information processing apparatuses 200 are not limited thereto. For example, the camera system 1 may be configured to include a plurality of cameras 100 installed in a scattered manner at a plurality of intersections or the like on the same road 1100.

The cameras 100 are installed so as to capture an image of the traffic environment 1000 including the road 1100 and the moving objects 2000 moving along the road 1100. The moving objects 2000 moving on the road 1100 include, for example, vehicles, people, and the like that can move on the road 1100. For example, the moving objects 2000 may include large motor vehicles, standard motor vehicles, special large motor vehicles, large motorcycles, standard motorcycles, special small motor vehicles, bicycles, and the like, as defined by the Road Traffic Act, but may also include other vehicles, moving objects, and the like. The large motor vehicles include those, for example, with a gross vehicle weight of 8000 kg or more, a maximum loading capacity of 5000 kg or more, and a seating capacity of 11 persons or more (buses, trucks, and the like). The cameras 100 can electronically capture images using image sensors such as a charge coupled device image sensor (CCD), a complementary metal oxide semiconductor (CMOS), or the like. The cameras 100 are installed with their imaging directions directed toward the road plane of the traffic environment 1000. The cameras 100 can be installed, for example, on the road 1100, intersections, parking lots, underpasses, and the like. The cameras 100 may capture videos and/or still images.

In the example illustrated in FIG. 1, the road 1100 includes lanes in which the moving objects 2000 can move in a movement direction 1100M. The moving objects 2000 include a standard vehicle 2100, a large vehicle 2200, and a two-wheel vehicle 2300. Examples of the standard vehicle 2100 include a standard motor vehicle. Examples of the large vehicle 2200 include a large motor vehicle, a special large motor vehicle, and the like. Examples of the two-wheel vehicle 2300 include a large motor vehicle, a standard motorcycle, and the like. The moving objects 2000 pass position P1 and move to position P2 while moving in the direction of the movement direction 1100M.

The cameras 100 include a first camera 100A and a second camera 100B. The first camera 100A is installed so as to allow capturing of the image of the position P1 on the road 1100 and the moving objects 2000 moving through the position P1. The second camera 100B is installed so as to allow capturing of the image of the position P2 on the road 1100 and the moving objects 2000 moving through the position P2. That is, the first camera 100A of the cameras 100 captures the image of the position P1 on the upstream side, and the second camera 100B of the cameras 100 captures the image of the position P2 on the downstream side in the movement direction 1100M of the road 1100. The first camera 100A and the second camera 100B are devices that can capture the image of the same moving objects 2000 on the moving path.

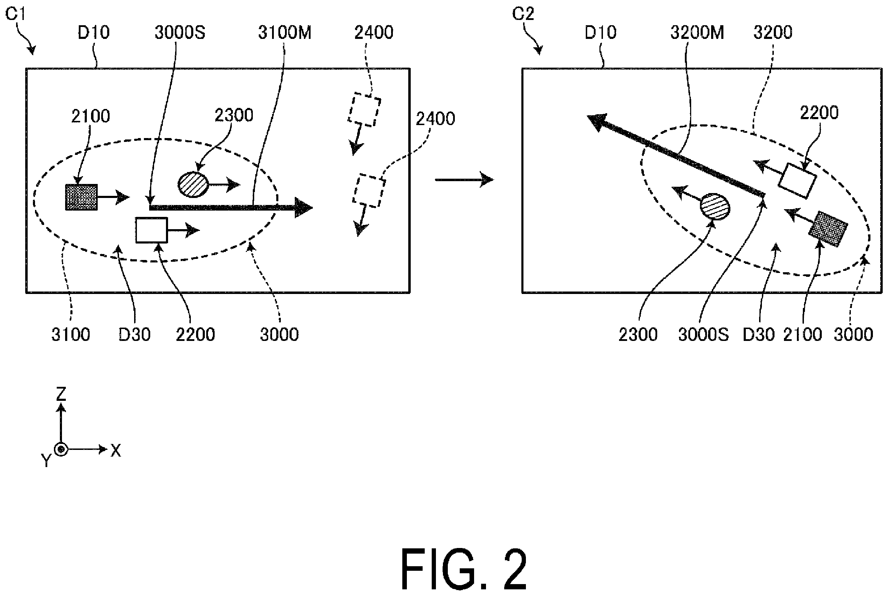

FIG. 2 schematically illustrates image information captured by the first camera 100A and the second camera 100B illustrated in FIG. 1. In the example illustrated in FIG. 2, image information D10 schematically illustrates an image. In the following description, an X-axis direction is a movement direction of the moving objects 2000 parallel to a road surface of the road 1100, a Y-axis direction is a height direction with respect to the road surface, and a Z-axis direction orthogonal to the X-axis direction.

In a scene C1 illustrated in FIG. 2, the first camera 100A acquires the image information D 10 obtained by capturing the image of the standard vehicle 2100, the large vehicle 2200, and the two-wheel vehicle 2300 moving on the road 1100. In this case, the first camera 100A identifies the standard vehicle 2100, the large vehicle 2200, and the two-wheel vehicle 2300 from the image information D10, and identifies a first moving object group 3100 including the standard vehicle 2100, the large vehicle 2200, and the two-wheel vehicle 2300. The first camera 100A generates moving object group information D30 indicating the identification result, and transmits the moving object group information D30 to the information processing apparatus 200.

The moving object group of the present disclosure may include cases in which the number of the moving objects 2000 is singular or plural. The moving object group information D30 in the present disclosure may include information including the presence or absence, a type, a color, a movement direction, an arrangement, and a relative position of the moving objects 2000, or a size, a score, or the like of the moving objects 2000. The type of the moving object 2000 in the moving object group information D30 of the present disclosure may include information such as a light vehicle, a standard vehicle, a large vehicle, a police vehicle, an ambulance, a fire engine, a truck, a bus, a motorcycle, a bicycle, or the like. The type of the moving object 2000 in the moving object group information D30 of the present disclosure may include information on the manufacturer of the moving object 2000 or the name of the model of the moving object 2000, or any combination of these. The type of the moving object 2000 in the moving object group information D30 of the present disclosure may include information on a hybrid car, an electric car, a self-driving car, a minivan, a compact car, a sedan, an SUV, or a sports car, or any combination of these. The arrangement of the moving object 2000 in the moving object group information D30 of the present disclosure may include the position of the traveling lane of the moving object 2000 when a plurality of travel lanes are provided, or the driving order among the plurality of moving objects. The size of the moving object 2000 in the moving object group information D30 of the present disclosure may include information on the overall length, width, height, or total displacement of the moving object 2000, or any combination of these. The score of the present disclosure may be a value representing whether the moving object group is easy to use. The score of the present disclosure may be set such that the value of the moving object group increases as the number of the moving objects 2000 in the moving object group or the number of types of the moving objects 2000, or the like increases. Accordingly, the information processing apparatus 200 can improve the determination accuracy as to whether the moving object groups are the same moving object group by not using the moving object groups with low scores in the determination.

For example, the camera 100 may identify information of the type, the color, the movement direction, the arrangement, the relative position, the score, or any combination of these of the moving object 2000 included in the identified first moving object group 3100. The type includes a type for each moving object 2000 included in the moving object group. The color includes color information for each moving object 2000 included in the moving object group. The movement direction is a movement direction of the moving object 2000 included in the moving object group. The arrangement includes an arrangement (driving order) of the moving objects 2000 in the moving object group. The relative position includes a position from the center of gravity in the moving object group. The score includes a degree of importance, a degree of attention, or the like of the moving object group or each moving object 2000 included in the moving object group.

The camera 100 can estimate the object captured in the image information D10 using an object estimation model M1 that is machine-learned by the learning device 300. The camera 100 inputs the image information D10 into the object estimation model M1 and estimates the output of the object estimation model M1 as the captured object.

As illustrated in FIG. 1, a learning device 300 is, for example, a computer, a server device, or the like. The learning device 300 may or may not be included in the configuration of the camera system 1. The learning device 300 acquires a plurality of pieces of first teaching information that include the image information D10, which is the captured image of the traffic environment 1000 including the moving objects 2000, and correct answer value information of the moving objects 2000. The correct answer value information may include information of, for example, the image, the type, the color, or the movement direction (orientation) of the moving object 2000, or any combination of these.

The learning device 300 generates the object estimation model M1 for estimating the moving object 2000 indicated by the image information D10 input by machine-learning using the plurality of pieces of the first teaching information. For supervised machine-learning, for example, an algorithm such as a neural network, linear regression, or logistic regression can be used. The object estimation model M1 is a model obtained by machine-learning of the images and the correct answer value information of the plurality of pieces of the teaching information so as to estimate the moving object 2000 of the input image information D10. When the image information D10 is input, the object estimation model M1 outputs an estimation result estimating the type, the color, the movement direction, and the like of the moving object 2000 indicated by the image information D10. The learning device 300 allows the camera 100 to recognize objects by providing the generated object estimation model M1 to the camera 100.

The learning device 300 generates a determination model M2 for determining whether the plurality of pieces of the input moving object group information D30 indicate the same moving object group by way of machine-learning using the plurality of pieces of teaching information. The determination model M2 is a model that is machine-learned using moving object group information D30 and the correct answer value information as the plurality of pieces of the teaching information so as to determine whether the plurality of pieces of the input moving object group information D30 indicate the same moving object group. When the plurality of pieces of the moving object group information D30 are input, the determination model M2 outputs a determination result as to whether the plurality of moving object groups are the same moving object group. The learning device 300 enables determination based on the output of the determination model M2 by providing the generated determination model M2 to the information processing apparatus 200. An example of the learning device 300 will be described later.

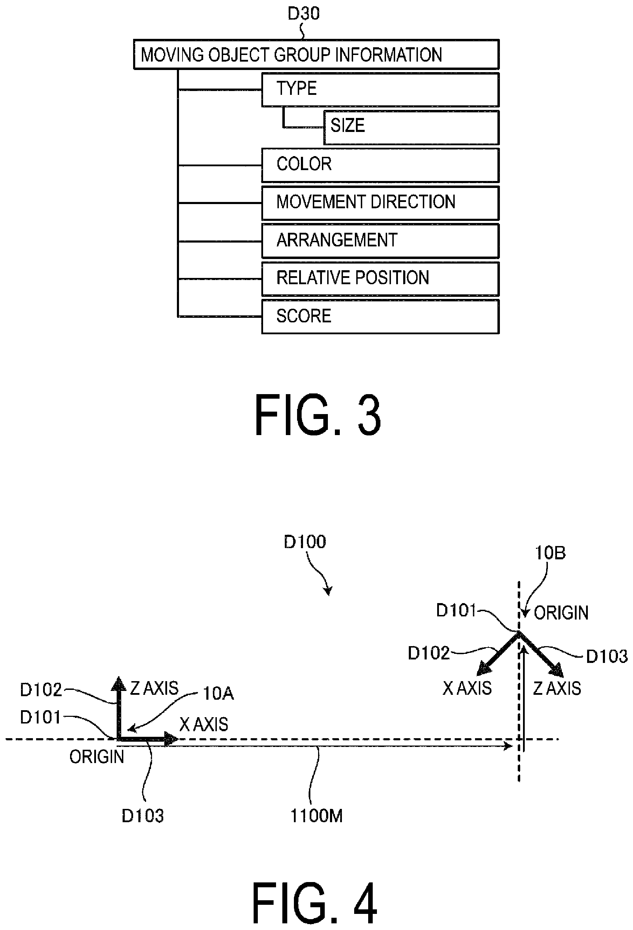

FIG. 3 illustrates an example of a data structure of the moving object group information D30. As illustrated in FIG. 3, the moving object group information D30 includes various types of information such as the type, the color, the movement direction, the arrangement, the relative position, the score, and the like. The types of the moving object group information D30 include the size such as large or small, or large, medium, or small of the moving objects 2000 of the same type. The present embodiment describes, but is not limited to, a case in which the camera 100 generates and transmits the moving object group information D30 to the information processing apparatus 200 based on the identification result. For example, the camera system 1 may realize the function of generating the moving object group information D30 in the information processing apparatus 200.

As illustrated in FIG. 2, when the image information D10 illustrated in a scene C1 is captured, the first camera 100A identifies the types, the colors, the movement directions, and the like of the standard vehicle 2100, the large vehicle 2200, and the two-wheel vehicle 2300 from the image information D10 using a recognition program, machine-learning, or the like. The first camera 100A identifies the first moving object group 3100 including the plurality of identified moving objects 2000, and identifies the first movement direction 3100M of the first moving object group 3100 and the arrangement, the relative position, and the score of the moving objects 2000 in the first moving object group 3100. The first movement direction 3100M is represented by a vector from an origin 3000S of the first moving object group 3100. The first camera 100A generates the moving object group information D30 of the first camera 100A based on the identification result. The first camera 100A transmits the generated moving object group information D30 to the information processing apparatus 200.

For example, the first camera 100A can capture the image of the traffic environment 1000 in which the image of the first moving object group 3100 and the image of moving objects 2400 movable in a direction intersecting the first movement direction 3100M of the first moving object group 3100 can be captured. In this case, the first camera 100A can identify the moving object group of the moving objects 2400 movable in the direction intersecting the first movement direction 3100M of the first moving object group 3100. That is, the first camera 100A can identify the moving object groups moving in different directions. In the following description, the first moving object group 3100 and the second moving object group 3200 will simply be referred to as the moving object group 3000 when it is not necessary to distinguish therebetween.

Subsequently, the standard vehicle 2100, the large vehicle 2200, and the two-wheel vehicle 2300 having passed the position P1 on the road 1100 move to the position P2 on the road 1100. When the standard vehicle 2100, the large vehicle 2200, and the two-wheel vehicle 2300 reach the position P2 on the road 1100, the second camera 100B captures the image of the image information D10 illustrated in a scene C2. The second camera 100B identifies the types, the colors, the movement directions, and the like of the standard vehicle 2100, the large vehicle 2200, and the two-wheel vehicle 2300 from the image information D10 using the recognition program, machine-learning, or the like. The second camera 100B identifies the second moving object group 3200 including the plurality of identified moving objects 2000, and identifies the second movement direction 3200M of the second moving object group 3200, as well as the arrangements, the relative positions, and the scores of the moving objects 2000 in the second moving object group 3200. The second movement direction 3200M is represented by a vector from the origin 3000S of the second moving object group 3200. The second camera 100B generates the moving object group information D30 of the second camera 100B based on the identification result. The second camera 100B transmits the generated moving object group information D30 to the information processing apparatus 200.

In general, when the plurality of moving objects 2000 move on the road 1100, their arrangements and driving orders are often roughly unchanged although they may not exactly coincide with each other. Focusing on this, when the moving object group information D30 is received from the first camera 100A and the second camera 100B, the information processing apparatus 200 determines whether the first moving object group 3100 captured by the first camera 100A and the second moving object group 3200 captured by the second camera 100B are the same moving object group 3000. The information processing apparatus 200 can determine that they are the same moving object group when the degree of agreement of the information on the types, the colors, the arrangements or the positions, or any combination of these of the plurality of moving objects 2000 indicated by the two pieces of moving object group information D30 exceeds a determination threshold. For example, whether the moving object groups are the same moving object group 3000 can be determined using a determination model obtained by machine-learning of the plurality of pieces of the moving object group information D30 and the correct answer information by the learning device.

The information processing apparatus 200 outputs installation relationship information that can identify the installation relationship between the first camera 100A and the second camera 100B based on the movement mode of the first moving object group 3000 and the movement mode of the second moving object group 3200 determined to be the same moving object group 3100. For example, the information processing apparatus 200 estimates a mutual relationship between the plurality of cameras 100 and outputs installation relationship information that can identify relative angles, relative positions, and the like of the plurality of cameras 100. In the present embodiment, the information processing apparatus 200 estimates the mutual relationship between the plurality of cameras 100 by determining how the moving objects 2000 captured by the first camera 100A and the second camera 100B appear as a group among the plurality of cameras 100. The movement mode of the present disclosure may include a speed, direction, and position of movement, a travel lane, a distance relative to another moving object, a speed relative to another moving object, or a position relative to another moving object, or any combination of these.

FIG. 4 illustrates an example of a configuration of installation relationship information D100 output from the information processing apparatus 200. As illustrated in FIG. 4, the information processing apparatus 200 outputs the installation relationship information D100 generated based on information such as the image information D10, the traffic environment 1000, and the like. In the present embodiment, the installation relationship information D100 is information that can identify the estimated relative angles and relative positions. The installation relationship information D100 includes an origin D101, an X-axis D 102, and a Z-axis D 103 of each of the plurality of cameras 100 with reference to the same movement direction 1100M of the same road 1100. The origin D101 indicates the axis of the road surface of the road 1100 for each camera 100. The X-axis D102 indicates the X-axis direction with respect to the origin D101. The Z-axis D103 indicates the Z-axis direction with respect to the origin D101 and is orthogonal to the X-axis D102.

In the example illustrated in FIG. 4, the installation relationship information D100 includes the origin D101, the X-axis D102, and the Z-axis D103 corresponding to the first camera 100A and the second camera 100B. The installation relationship information D100 indicates a relative angle of the origin D101 of the second camera 100B with respect to the origin D101 of the first camera 100A, in which the origin D101 of the second camera 100B is rotated by 130 degrees. The installation relationship information D100 indicates the relative position of the origin D101 of the second camera 100B with respect to the origin D101 of the first camera 100A, in which the origin D101 of the second camera 100B is away by 45 m in the X-axis direction and by 8 m in the Z-axis direction. This allows the information processing apparatus 200 to output the installation relationship information D100, thereby recognizing the mutual relationship or the like of the plurality of installed cameras 100. In the present embodiment, the installation relationship information D100 indicates the mutual relationship regarding the installation of two cameras 100, but may indicate the mutual relationship of the cameras 100 installed at two or more locations. The installation relationship information D100 of the present disclosure can include a distance between the plurality of cameras 100, a relative image capturing direction of the plurality of cameras 100, an installation height of the plurality of cameras 100 from the ground, or any combination of these.

### Configuration Example of Camera

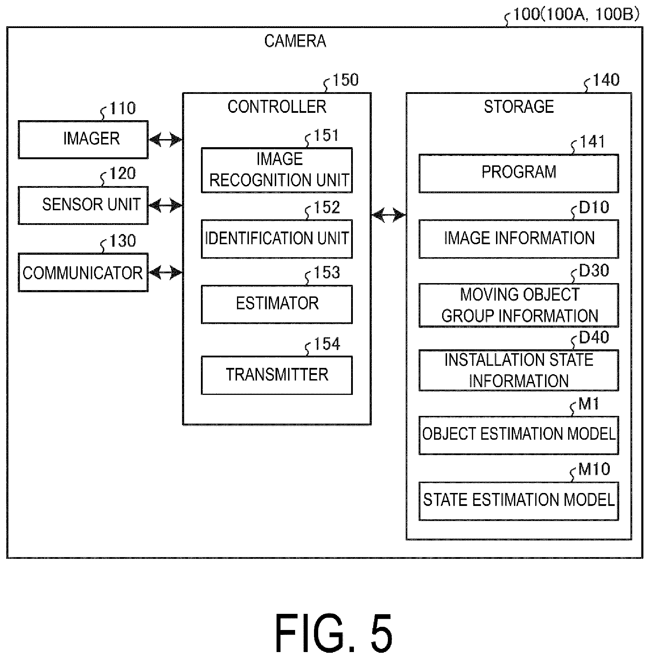

FIG. 5 illustrates a configuration example of the cameras 100 illustrated in FIG. 1. As illustrated in FIG. 5, each of the plurality of cameras 100 includes an imager 110, a sensor unit 120, a communicator 130, a storage 140, and a controller 150. The controller 150 is electrically connected to the imager 110, the sensor unit 120, the communicator 130, the storage 140, and the like.

The present embodiment describes, but is not limited to, a configuration of the camera 100 including the imager 110, the sensor unit 120, the communicator 130, the storage 140, and the controller 150. For example, the camera 100 may be configured to include the imager 110, the communicator 130, the storage 140, and the controller 150.

The imager 110 is installed so as to allow capturing of the image of the traffic environment 1000 including the road 1100 and the moving objects 2000 moving on the road 1100. The imager 110 can electronically capture the image information D10 using an image sensor such as a charge coupled device (CCD) or a complementary metal oxide semiconductor (CMOS). The imager 110 can capture the image of the traffic environment 1000 in real time at a predetermined frame rate and supply the captured image information D10 to the controller 150.

The sensor unit 120 detects sensor information that can identify the state of the camera 100. For example, various types of sensors such as a position sensor or a gyro sensor can be used as the sensor unit 120. A position sensor is exemplified as a sensor that acquires a position of absolute coordinates of a global positioning system (GPS) receiver or the like. The sensor unit 120 can supply sensor information including an installation position, an installation angle, and the like of the camera 100 to the controller 150. This allows the controller 150 to acquire information on the self-position, the installation state, and the like of the camera 100 based on the sensor information.

The communicator 130 can communicate, for example, with the information processing apparatus 200, other communication devices, or the like. The communicator 130 can support various types of communication standards. For example, the communicator 130 can transmit and receive various types of data via a wired or wireless network or the like. The communicator 130 can supply received data to the controller 150. The communicator 130 can transmit data to a transmission destination designated by the controller 150.

The storage 140 can store a program and various types of information (data). The storage 140 is also used as a work area that temporarily stores a processing result of the controller 150. The storage 140 may include a freely selected non-transitory storage medium such as a semiconductor storage medium and a magnetic storage medium. The storage 140 may include a plurality of types of storage media. The storage 140 may include a combination of a portable storage medium such as a memory card, an optical disk, a magneto-optical disk, or the like and a device for reading a storage medium. The storage 140 may include a storage device used as a temporary storage area such as a Random Access Memory (RAM).

The storage 140 can store various types of information such as a program 141, the image information D10, the moving object group information D30, the installation state information D40, the object estimation model M1, and the state estimation model M10. The program 141 is a program that causes the controller 150 to execute functions of implementing processing related to various operations of the camera 100. The image information D10 includes information indicating the image captured by the imager 110. The moving object group information D30 includes information indicating the moving object group 3000 identified from the image information D10 captured by the imager 110. The installation state information D40 includes information that can identify the installation state, the installation position, and the like of the camera 100. The object estimation model M1 is a machine-learning model provided by the learning device 300 and is used for estimating the moving object 2000 of the input image information D10. The state estimation model M10 is a machine-learning model that is machine-learned for estimating installation state parameters of the camera 100 that has captured the input image information D10. The state estimation model M10 is used to estimate the installation state parameters of the camera 100 that has captured the image information D10.

The controller 150 is an arithmetic processing device. Examples of the arithmetic processing device include, but are not limited to, a central processing unit (CPU), a system-on-a-chip (SoC), a micro control unit (MCU), a field-programmable gate array (FPGA), and a coprocessor. The controller 150 can comprehensively control the operation of the camera 100 to implement various functions.

Specifically, the controller 150 can execute instructions included in the program 141 stored in the storage 140 while referring, as appropriate, to information stored in the storage 140. The controller 150 can control the functional units in accordance with the data and the instructions, thereby implementing various functions. Examples of the functional units include, but are not limited to, the sensor unit 120 and the communicator 130.

The controller 150 includes functional units such as an image recognition unit 151, an identification unit 152, an estimator 153, a transmitter 154, and the like. The controller 150 executes the program 141 to implement functional units such as the image recognition unit 151, the identification unit 152, the estimator 153, the transmitter 154, and the like. The program 141 is a program for causing the controller 150 of the camera 100 to function as the image recognition unit 151, the identification unit 152, the estimator 153, and the transmitter 154.

The image recognition unit 151 recognizes the moving object 2000 from the image indicated by the image information D10 captured by the imager 110. The image recognition unit 151 has a function of recognizing the presence or absence, the type, the color, the movement direction, the arrangement, the relative position, the score, and the like of the moving object 2000 in the image, using, for example, a machine-learning model that has learned recognition of the moving object 2000, an image recognition program, or the like.

The identification unit 152 identifies the moving object group 3000 including at least one moving object 2000 from the image captured by the imager 110 based on the recognition result of the image recognition unit 151. The identification unit 152 identifies the moving object group 3000 based on the presence or absence, the type, the color, the movement direction, the arrangement, the relative position, the score, and the like of the moving object 2000 in the image, and identifies the movement direction of the moving object group 3000, the origin (center) of the moving object group 3000, and the like. The identification unit 152 generates, and stores in the storage 140, the moving object group information D30 that can identify the moving object group 3000 that has been identified.

The estimator 153 can provide a function of estimating the installation state parameters of the camera 100 that has captured the image of the input image information D10 using the state estimation model M10 generated by the learning device 300. For example, the installation state parameters include the installation angle, the installation position, and the like of the camera 100. The installation state parameters may include, for example, the number of pixels of the camera 100, the size of the image, and the like. The estimator 153 can input the image information D10 to the state estimation model M10 to estimate the installation state parameters of the camera 100 based on the output of the state estimation model M10. The estimator 153 generates, and stores in the storage 140, the installation state information D40 indicating the installation angle, the installation position, and the like of the camera 100 based on the estimated installation state parameters.

The transmitter 154 can provide a function of transmitting various types of information to the information processing apparatus 200 via the communicator 130. The transmitter 154 transmits the image information D10, the moving object group information D30, the installation state information D40, and the like to the information processing apparatus 200 via the communicator 130. The transmitter 154 controls the communicator 130 so as to transmit the moving object group information D30 and the installation state information D40 to the information processing apparatus 200 at the time of installation, maintenance, or the like of the camera 100.

The example of the functional configuration of the camera 100 according to the present embodiment has been described above. The configuration described above with reference to FIG. 5 is merely an example, and the functional configuration of the camera 100 according to the present embodiment is not limited to this example. The functional configuration of the camera 100 according to the present embodiment can be flexibly modified according to the specifications and operations.

### Configuration Example of Learning Device

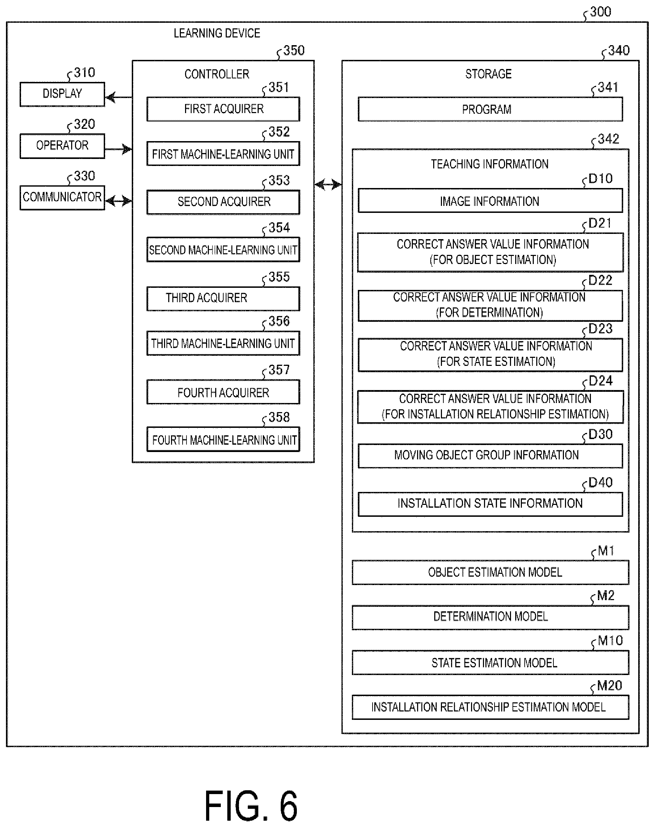

FIG. 6 illustrates an example of a configuration of the learning device 300 according to the embodiment. As illustrated in FIG. 6, the learning device 300 includes a display 310, an operator 320, a communicator 330, a storage 340, and a controller 350. The controller 350 is electrically connected to the display 310, the operator 320, the communicator 330, the storage 340, and the like. In the present embodiment, an example in which the learning device 300 executes machine-learning using a convolution neural network (CNN) which is one type of neural network. As is well known, the CNN includes an input layer, an intermediate layer, and an output layer.

The display 310 is configured to display various types of information under the control of the controller 350. The display 310 includes a display panel such as a liquid crystal display and an organic EL display. The display 310 displays information such as characters, diagrams, and images, in accordance with signals input from the controller 350.

The operator 320 includes one or more devices for receiving an operation of the user. The devices for receiving the operation of the user include, for example, a key, a button, a touch screen, a mouse, and the like. The operator 320 can supply a signal corresponding to the received operation to the controller 350.

The communicator 330 can communicate with, for example, the camera 100, the information processing apparatus 200, or other communication devices. The communicator 330 can support various communication standards. The communicator 330 can transmit and receive various types of data via, for example, a wired or wireless network. The communicator 330 can supply received data to the controller 350. The communicator 330 can transmit data to a transmission destination designated by the controller 350.

The storage 340 can store a program and various types of information. The storage 340 is also used as a work area that temporarily stores a processing result of the controller 350. The storage 340 may include a freely selected non-transitory storage medium such as a semiconductor storage medium and a magnetic storage medium. The storage 340 may include a plurality of types of storage media. The storage 340 may include a combination of a portable storage medium such as a memory card, an optical disk, a magneto-optical disk, or the like and a device for reading a storage medium. The storage 340 may include a storage device used as a temporary storage area such as a RAM.

The storage 340 can store various types of information such as a program 341, teaching information 342, the object estimation model M1, the determination model M2, the state estimation model M10, and an installation relationship estimation model M20. The program 341 uses the CNN to cause the controller 350 to execute a function of generating the object estimation model M1 that estimates the object indicated by the image information D10. The program 341, using CNN, causes the controller 350 to execute a function of generating the determination model M2 for determining whether a plurality of pieces of the moving object group information D30 are the same moving object group 3000. The program 341 causes the controller 350 to execute a function of generating, using the CNN, the state estimation model M10 that estimates the installation state parameters of the camera 100 that has captured the image of the image information D10. The program 341 causes the controller 350 to execute a function of generating, using the CNN, the installation relationship estimation model M20 that estimates the installation relationship of the plurality of cameras 100.

The teaching information 342 includes learning information, training information, and the like used for machine-learning. The teaching information 342 includes information combining the image information D10 used for machine-learning of the object estimation and the correct answer value information D21 associated with the image information D10. The image information D10 is input information of supervised learning. For example, the image information D 10 indicates a color image obtained by capturing the image of the traffic environment 1000 including the moving objects 2000. The correct answer value information D21 is correct answer information in the supervised machine-learning. The correct answer value information D21 includes, for example, information such as the image, the type, the color, and the movement direction (orientation) of the moving objects 2000.

The teaching information 342 includes information combining the moving object group information D30 used for machine-learning of determination of the moving object group 3000 and correct answer value information D22 for machine-learning as to whether the moving object group information D30 is of the same moving object group 3000. For example, the correct answer value information D22 includes the plurality of pieces of moving object group information D30 that is determined to be of the same moving object group 3000. The correct answer value information D22 includes the information such as the image, the arrangement, the movement direction, and the like of the moving object group 3000 for determining it to be of the same moving object group 3000.

The teaching information 342 includes data combining the image information D10 used for machine-learning of the state estimation and the correct answer value information D23 associated with the image information D10. The image information D10 is input information of supervised learning. For example, the image information D10 indicates a color image capturing the image of the traffic environment 1000 including the moving object 2000, with the number of pixels of the color image being 1280 × 960 pixels. The correct answer value information D23 includes information indicating the installation state parameters of the camera 100 that has captured the image information D10. The correct answer value information D23 is the correct answer information of supervised machine-learning. For example, the correct answer value information D23 includes data indicating six parameters (values) of an installation angle (α, β, γ) and an installation position (x, y, z) of the camera 100.

The teaching information 342 includes information combining the moving object group information D30 and the installation state information D40 used for machine-learning for estimating the installation relationship of the plurality of cameras 100, and the correct answer value information D24 for estimating the installation relationship from the moving object group information D30 and the installation state information D40. For example, the correct answer value information D24 includes information for estimating the installation relationship information D100 based on the relationship between the movement direction of the plurality of pieces of moving object group information D30 and the installation state or the like indicated by the installation state information D40 of the plurality of cameras 100.

The object estimation model M1 is the learning model generated by extracting features, regularity, patterns, and the like of the moving object 2000 indicated by the image information D10 using the image information D10 and the correct answer value information D21 included in the teaching information 342, and performing machine-learning of the relationship with respect to the correct answer value information D21. When the image information D10 is input, the object estimation model M1 predicts the teaching information 342 having features or the like similar to those of the moving object 2000 indicated by the image information D10, estimates the position, the direction, the speed, and the vehicle type of the object indicated by the image information D10, and outputs the estimation result.

The determination model M2 is a learning model generated by extracting features, regularity, patterns, and the like of the moving object group 3000 indicated by the moving object group information D30 using the plurality of pieces of the moving object group information D30 and the correct answer value information D22 included in the teaching information 342, and performing machine-learning of the relationship as to whether the plurality of moving object groups 3000 are the same moving object group 3000. When the plurality of pieces of the moving object group information D30 are input, the determination model M2 determines whether the plurality of moving object groups 3000 indicated by the plurality of pieces of the moving object group information D30 are the same moving object group 3000, and outputs the determination result. The determination model M2 can determine whether the plurality of moving object groups 3000 indicated by the plurality of pieces of the moving object group information D30 are the same moving object group 3000 based on at least one of the type information, the arrangement information, and the color information of the moving objects 2000 of the moving object groups 3000.

The determination model M2 can determine the type information of the moving objects 2000 in the first moving object group 3100 based on the first relative size of each moving object 2000 with respect to the size of the first moving object group 3100, and the type information of the moving objects 2000 in the second moving object group 3200 based on the second relative size of each moving object 2000 with respect to the size of the second moving object group 3200. The determination model M2 can determine whether the first moving object group 3100 and the second moving object group 3200 are the same moving object group based on the first relative position of each moving object 2000 having the center of gravity of the first moving object group 3100 as the origin, and the second relative position of each moving object 2000 having the center of gravity of the second moving object group 3200 as the origin. When the scores of the first moving object group 3100 and the second moving object group 3200 satisfy a determination condition, the determination model M2 can determine whether the first moving object group 3100 and the second moving object group 3200 are the same moving object group.

The state estimation model M10 is the learning model generated by extracting features, regularity, patterns, and the like of the image information D10 using the image information D10 and the correct answer value information D23 included in the teaching information 342, and performing machine-learning of the relationship with the correct answer value information D23. When the image information D10 is input, the state estimation model M10 predicts the teaching information 342 similar to the features or the like of the image information D10, estimates the installation state parameters of the camera 100 that has captured the image information D10 based on the correct answer value information D23, and outputs the estimation result.

The installation relationship estimation model M20 is the learning model generated by machine-learning of the installation relationship among the plurality of cameras 100 based on how the moving object group 3000 appears (capturing state) by the plurality of cameras 100 using the moving object group information D30, the installation state information D40, and the correct answer value information D24 included in the teaching information 342. When the plurality pieces of pieces of the moving object group information D30 and the installation state information D40 are input, the installation relationship estimation model M20 predicts the teaching information 342 similar to, for example, how the moving object group 3000 appears by the plurality of cameras 100, estimates the installation relationship between the plurality of cameras 100 based on the correct answer value information D24, and outputs the estimation result.

The controller 350 is an arithmetic processing device. For example, the arithmetic processing device includes, but is not limited to, a CPU, an SoC, an MCU, an FPGA, and a coprocessor. The controller 350 can comprehensively control the operation of the learning device 300 to implement various functions.

Specifically, the controller 350 can execute instructions included in the program 341 stored in the storage 340 while referring, as appropriate, to the information stored in the storage 340. The controller 350 can control the functional units in accordance with the data and the instructions, thereby implementing various functions. The functional units include, but are not limited to, for example, the display 310 and the communicator 330.

The controller 350 includes functional units such as a first acquirer 351, a first machine-learning unit 352, a second acquirer 353, a second machine-learning unit 354, a third acquirer 355, a third machine-learning unit 356, a fourth acquirer 357, a fourth machine-learning unit 358, and the like. By executing the program 341, the controller 350 implements the functions of the first acquirer 351, the first machine-learning unit 352, the second acquirer 353, the second machine-learning unit 354, the third acquirer 355, the third machine-learning unit 356, the fourth acquirer 357, the fourth machine-learning unit 358, and the like. The program 341 is a program for causing the controller 350 of the learning device 300 to function as the first acquirer 351, the first machine-learning unit 352, the second acquirer 353, the second machine-learning unit 354, the third acquirer 355, the third machine-learning unit 356, the fourth acquirer 357, and the fourth machine-learning unit 358.

The first acquirer 351 acquires the image information D10 capturing the traffic environment 1000 including the moving object 2000 and the correct answer value information D21 as the teaching information 342. The first acquirer 351 acquires the image information D10 and the correct answer value information D21 from a preset storage destination, a storage destination selected by the operator 320, or the like, and stores them in association with the teaching information 342 in the storage 340. The first acquirer 351 acquires the plurality of pieces of the image information D 10 and the correct answer value information D21 used for machine-learning.

The first machine-learning unit 352 generates the object estimation model M1 for estimating the moving object 2000 indicated by the input image information D10 by machine-learning using the plurality of pieces of teaching information 342 acquired by the first acquirer 351. For example, the first machine-learning unit 352 constructs the CNN based on the teaching information 342. The CNN is constructed as a network in which the image information D10 is input and the estimation result with respect to the image information D10 is output. The estimation result includes information such as the position, the direction, the speed, and the vehicle type of the moving object 2000 (object) indicated by the image information D10.

The second acquirer 353 acquires the plurality of pieces of the moving object group information D30 and the correct answer value information D22 as the teaching information 342. The second acquirer 353 acquires the moving object group information D30 and the correct answer value information D22 from the predetermined storage destination, the destination selected by the operator 320, or the like, and stores them in association with the teaching information 342 in the storage 340. The second acquirer 353 acquires the plurality of pieces of the moving object group information D30 and the correct answer value information D22 used for machine-learning.

The second machine-learning unit 354 generates the determination model M2 for determining whether the plurality of moving object groups 3000 indicated by the plurality of pieces of the input moving object group information D30 are the same moving object group 3000 in the machine-learning using a plurality of pieces of the teaching information 342 acquired by the second acquirer 353. The second machine-learning unit 354 constructs the CNN based on, for example, the teaching information 342. The CNN is constructed as a network in which the plurality of pieces of the moving object group information D30 are input, and the determination result as to whether the plurality of moving object groups 3000 indicated by the plurality of pieces of the input moving object group information D30 are the same moving object group 3000 is output.

For example, the determination model M2 is machine-learned so as to compare the movement directions of the plurality of moving object groups 3000 with each other and determine whether the plurality of moving object groups 3000 are the same moving object group 3000 based on the comparison result and the correct answer value. For example, the determination model M2 is machine-learned so as to compare combinations of the type information of the plurality of moving objects 2000 included in the moving object group 3000, and determine whether the plurality of moving object groups 3000 are the same moving object group 3000 based on the comparison result and the correct answer value. For example, the determination model M2 is machine-learned so as to compare combinations of types, colors, and arrangements of the plurality of moving objects 2000 included in the moving object groups 3000, and relative positions of the plurality of moving objects 2000 with respect to the origin 3000S as the center of the moving object group 3000, and determine whether the plurality of moving object groups 3000 are the same moving object group 3000 based on the comparison result and the correct answer value.

The third acquirer 355 acquires, as the teaching information 342, the image information D 10 capturing the image of the traffic environment 1000 including the moving objects 2000 and the correct answer value information D23 of the installation state parameters of the camera 100 that has captured the image information D10. The third acquirer 355 acquires the image information D10 and the correct answer value information D23 from the preset storage destination, the storage destination selected by the operator 320, or the like, and stores them in association with the teaching information 342 in the storage 340. The third acquirer 355 acquires the plurality of pieces of the image information D10 and the correct answer value information D23 used for machine-learning.

The third machine-learning unit 356 generates the state estimation model M10 that estimates the installation state parameters of the camera 100 that has captured the input image information D 10 by machine-learning using the plurality of pieces of teaching information 342 acquired by the third acquirer 355. The third machine-learning unit 356 constructs the CNN based on, for example, the teaching information 342. The CNN is constructed as a network in which the image information D10 is input and an identification result with respect to the image information D10 is output. The identification result includes information for estimating the installation state parameters of the camera 100 that has captured the image of the image information D10.

The fourth acquirer 357 acquires, as the teaching information 342, the moving object group information D30, the installation state information D40 associated with the moving object group information D30, and the correct answer value information D24 indicating the installation relationship of the plurality of cameras 100 corresponding to the aforementioned information. The fourth acquirer 357 acquires the moving object group information D30, the installation state information D40, and the correct answer value information D24 from the preset storage destination, the storage destination selected by the operator 320, or the like, and stores them in association with the teaching information 342 in the storage 340. The fourth acquirer 357 acquires the plurality of pieces of moving object group information D30, the installation state information D40, and the correct answer value information D24 used for machine-learning.

The fourth machine-learning unit 358 generates the installation relationship estimation model M20 for estimating the installation relationship of the plurality of cameras 100 corresponding to the input moving object group information D30 and installation state information D40 in the machine-learning using the plurality of pieces of the teaching information 342 acquired by the fourth acquirer 357. The fourth machine-learning unit 358 constructs the CNN based on, for example, the teaching information 342. The CNN is constructed as a network in which the plurality of pieces of the moving object group information D30 and the installation state information D40 are input to estimate the installation relationship of the plurality of cameras 100. That is, the fourth machine-learning unit 358 generates the installation relationship estimation model M20 for estimating the installation relationship between the plurality of cameras based on how the moving object group 3000 appears in the plurality of cameras 100.

The example of the functional configuration of the learning device 300 according to the present embodiment has been described above. The configuration described above with reference to FIG. 6 is merely an example, and the functional configuration of the learning device 300 according to the present embodiment is not limited to the example. The functional configuration of the learning device 300 according to the present embodiment can be flexibly changed according to the specifications and operations.

The present embodiment describes, but is not limited to, the case in which the learning device 300 generates the object estimation model M1, the determination model M2, the state estimation model M10, and the installation relationship estimation model M20, but is not limited thereto. The learning device 300 may be implemented with a plurality of devices that individually generate the object estimation model M1, the determination model M2, the state estimation model M10, and the installation relationship estimation model M20.

### Configuration Example of Information Processing Apparatus

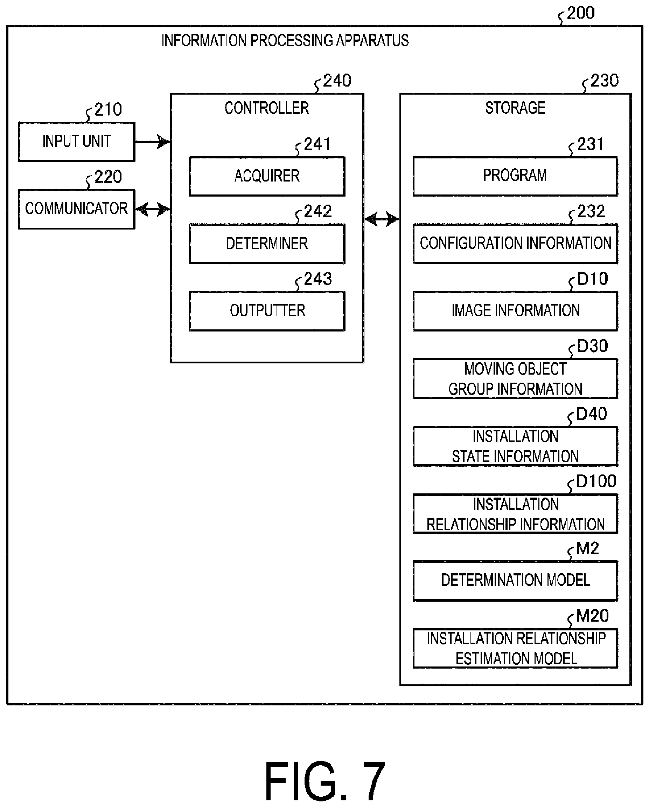

FIG. 7 illustrates a configuration example of the information processing apparatus 200 according to the embodiment. As illustrated in FIG. 7, the information processing apparatus 200 includes an input unit 210, a communicator 220, a storage 230, and a controller 240. The controller 240 is electrically connected to the input unit 210, the communicator 220, the storage 230, and the like. The following description explains a case in which the information processing apparatus 200 outputs the result from an external electronic device, but the configuration may include an output device such as a display device.

The input unit 210 receives the image information D10 captured by the camera 100. For example, the input unit 210 includes a connector that can be electrically connected to the camera 100 via a cable. The input unit 210 supplies the image information D10 input from the camera 100 to the controller 240.

The communicator 220 can communicate with, for example, the camera 100, the learning device 300, a management device that manages the camera 100, and the like. The communicator 220 can support various communication standards. The communicator 220 can transmit and receive various types of information via, for example, a wired or wireless network or the like. The communicator 220 can supply received information to the controller 240. The communicator 220 can transmit information to a transmission destination designated by the controller 240.

The storage 230 can store programs and information. The storage 230 is also used as a work area for temporarily storing a processing result of the controller 240. The storage 230 may include a freely selected non-transitory storage medium such as a semiconductor storage medium and a magnetic storage medium. The storage 230 may include a plurality of types of storage media. The storage 230 may include a combination of a portable storage medium such as a memory card, an optical disc, or a magneto-optical disk, and a storage medium reader. The storage 230 may include a storage device used as a temporary storage area such as a RAM.

The storage 230 can store, for example, a program 231, configuration information 232, the image information D10, the moving object group information D30, the installation state information D40, the installation relationship information D100, the determination model M2, the installation relationship estimation model M20, and the like. The program 231 causes the controller 240 to execute functions related to various types of control for operating the information processing apparatus 200. The configuration information 232 includes various types of information such as various settings related to the operation of the information processing apparatus 200, settings related to the installation state of the camera 100 to be managed, and the like. The storage 230 can associate a plurality of pieces of image information D10 with the moving object group information D30 and store them in a time-series order. The storage 230 can associate the installation state information D40 with the installation relationship information D100 corresponding to each of the plurality of cameras 100 and store them. The determination model M2 is the machine-learning model generated by the learning device 300. The installation relationship estimation model M20 is the machine-learning model generated by the learning device 300.

The controller 240 is an arithmetic processing device. For example, the arithmetic processing device includes, but is not limited to, a CPU, an SoC, an MCU, an FPGA, and a coprocessor. The controller 240 can comprehensively control the operation of the information processing apparatus 200 to implement various functions.

Specifically, the controller 240 executes instructions included in the program 231 stored in the storage 230, while referring to, as appropriate, the information stored in the storage 230. The controller 240 controls the functional units in accordance with the information and instructions, and implements various functions. The functional units include, but are not limited to, for example, the input unit 210 and the communicator 220.

The controller 240 includes functional units such as an acquirer 241, a determiner 242, and an outputter 243. The controller 240 executes the program 231 to implement functional units such as the acquirer 241, the determiner 242, and the outputter 243. The program 231 is a program for causing the controller 240 of the information processing apparatus 200 to function as the acquirer 241, the determiner 242, and the outputter 243.

The acquirer 241 acquires the image information D10 and the moving object group information D30 from the plurality of cameras 100 via the communicator 220. For example, the acquirer 241 acquires the moving object group information D30 as the first moving object group information from the first camera 100A, and the moving object group information D30 as the second moving object group information from the second camera 100B. The acquirer 241 associates the moving object group information D30 acquired from the first camera 100A with the moving object group information D30 acquired from the second camera 100B on the same day and during the same time zone, and stores them in the storage 230.

The determiner 242 determines whether the first moving object group 3100 identified from the image captured by the first camera 100A and the second moving object group 3200 identified from the image captured by the second camera 100B are the same moving object group 3000. The determiner 242 uses information such as the type, the color, the movement direction, the arrangement, the relative position, the score, and the like of the moving object 2000 in the plurality of moving object groups 3000 to determine whether the moving object groups 3000 are the same moving object group 3000. In the present embodiment, the determiner 142 uses the machine-learned determination model M2 for determination, and the determiner 242 inputs the plurality of pieces of the moving object group information D30 to the determination model M2 and provides the output of the determination model M2 as a determination result. When the determination result of the determination model M2 includes a confidence level, the determiner 242 may validate the determination of the same moving object group 3000 if the confidence level is high, and invalidate the determination of the same moving object group 3000 if the confidence level is low.

The outputter 243 outputs the installation relationship information D100 that can identify the installation relationship between the first camera 100A and the second camera 100B based on the movement mode of the first moving object group 3100 and the movement mode of the second moving object group 3200 determined to be the same moving object group 3000. The output of the outputter 243 includes, for example, generating the installation relationship information D100 and outputting the installation relationship information D100 to an external electronic device, an output device, or the like. The outputter 243 outputs the installation relationship information D100 that can identify the installation relationship between the first camera 100A and the second camera 100B based on the first movement direction 3100M of the first moving object group 3100 and the second movement direction 3200M of the second moving object group 3200. In the present embodiment, the outputter 243 estimates the installation relationship using the installation relationship estimation model M20 that has been machine-learned. The outputter 243 inputs the plurality of pieces of the moving object group information D30 and the installation state information D40 to the installation relationship estimation model M20 and provides the output of the installation relationship estimation model M20 as the estimation result.

The outputter 143 outputs the statistical installation relationship information D100 based on the time-series information of the first moving object group 3100 and the time-series information of the second moving object group 3200. For example, the outputter 243 outputs the installation relationship information D100 that statistically indicates the estimation result of the installation relationship between the first camera 100A and the second camera 100B for each of a plurality of different combinations of the first moving object group 3100 and the second moving object group 3200. The outputter 243 outputs the installation relationship information D100 that can identify the mutual relationship between the first camera 100A and the second camera 100B (for example, see FIG. 4).

The outputter 243 outputs the installation relationship information D100 that can identify the scores of the first moving object group 3100 and the second moving object group 3200. The outputter 243 outputs the installation relationship information D100 that can identify the score that becomes higher as the number of the moving objects 2000 or the number of pieces of the type information thereof included in the moving object group 3000 increases. The outputter 243 recognizes the number of the moving objects 2000 and the number of pieces of the type information thereof included in the moving object group 3000 based on the moving object group information D30, and adds the information indicating a score corresponding to the recognized number to the installation relationship information D100.

The outputter 243 ends the output operation when the number of the moving object groups 3000 determined by the determiner 242 reaches or exceeds a predetermined number. In this way, the information processing apparatus 200 can appropriately end the operation related to the estimation of the installation relationship by setting the number of the determined moving object groups 3000 as the end condition.

The example of the functional configuration of the information processing apparatus 200 according to the present embodiment has been described above. The configuration described above with reference to FIG. 7 is merely an example, and the functional configuration of the information processing apparatus 200 according to the present embodiment is not limited to the example. The functional configuration of the information processing apparatus 200 according to the present embodiment can be flexibly changed according to the specifications and operations.

### Example of Processing Procedure of Camera

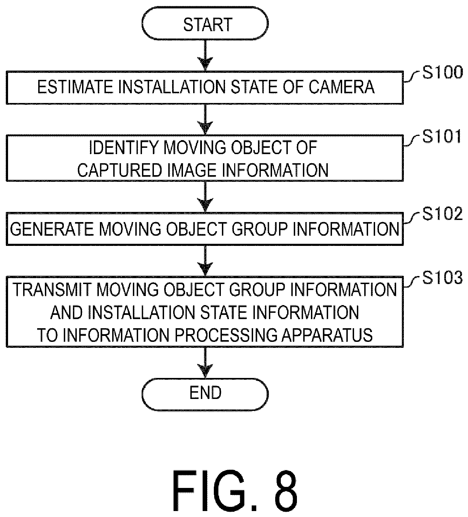

FIG. 8 is a flowchart illustrating an example of a processing procedure executed by the camera 100. The processing procedure illustrated in FIG. 8 is implemented by the controller 150 of the camera 100 by executing the program 141.

As illustrated in FIG. 8, the controller 150 of the camera 100 estimates the installation state of the camera 100 (step S100). For example, the controller 150 uses the installation relationship estimation model M20 that has been machine-learned and generated by the learning device 300 to estimate the installation state parameters of the camera 100 that has captured the image of the input image information D10. The controller 150 generates, and stores in the storage 140, the installation state information D40 based on the installation state parameters estimated by the installation relationship estimation model M20, the position information detected by the sensor unit 120, and the like. When the processing of step S100 ends, the controller 150 advances the process to step S101.

The controller 150 identifies the moving object 2000 of the image information D10 captured by the imager 110 (step S101). For example, the controller 150 inputs the image information D10 to the object estimation model M1, and identifies the moving object 2000 indicated by the image information D10 based on the output of the object estimation model M1. The identification result includes, for example, the type, the color, the movement direction (orientation), the arrangement in the image, and the like of the moving object 2000. The controller 150 stores the identification result in the storage 140 in association with the image information D10, and advances the process to step S102.

The controller 150 generates the moving object group information D30 (step S102). For example, based on the identification result of the plurality of moving objects 2000 identified in step S101, the controller 150 generates the moving object group information D30 that can identify the information such as the type, the color, the movement direction, and the like of the moving object 2000, and the movement direction, the arrangement device position, the score, and the like of the moving object group 3000. When the controller 150 associates the generated moving object group information D30 with the image information D10 and the installation state information D40, and stores them in the storage 140, the controller 150 advances the process to step S103.

The controller 150 transmits the moving object group information D30 and the installation state information D40 to the information processing apparatus 200 via the communicator 130 (step S103). For example, when the moving object group information D30 is generated based on the image information D10, the controller 150 transmits the moving object group information D30 to the information processing apparatus 200. In this way, the camera 100 can transmit the moving object group information D30 at a timing when the image of the moving object group 3000 is captured, thereby causing the information processing apparatus 200 to track the moving object group 3000 while it moves. When the processing in step S103 ends, the controller 150 ends the processing procedure illustrated in FIG. 8.

The processing procedure illustrated in FIG. 8 can be changed to a processing procedure in which the camera 100 does not transmit the installation state information D40 in a case in which the information processing apparatus 200 stores in advance the installation state information D40 of the camera 100. In this case, step S103 may be configured to transmit only the moving object group information D30 to the information processing apparatus 200.

### Example of Processing Procedure of Information Processing Apparatus

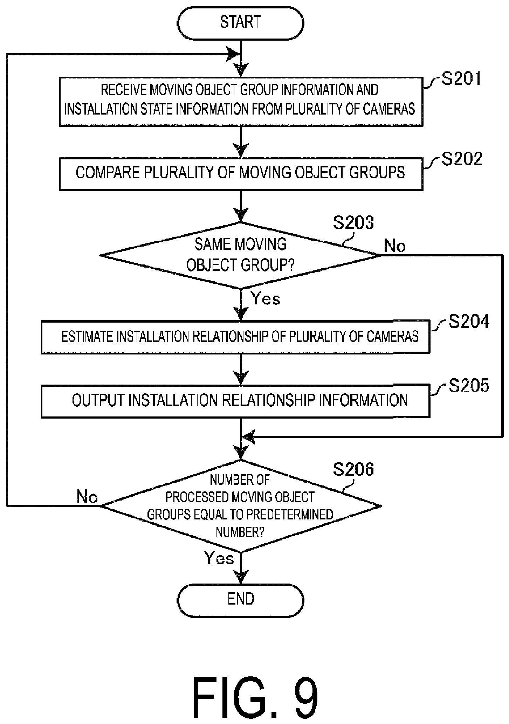

FIG. 9 is a flowchart illustrating an example of a processing procedure executed by the information processing apparatus 200. The processing procedure illustrated in FIG. 9 is implemented by the controller 240 of the information processing apparatus 200 by executing the program 231. The processing procedure illustrated in FIG. 9 is executed repeatedly by the controller 240.

As illustrated in FIG. 9, the controller 240 of the information processing apparatus 200 acquires the moving object group information D30 and the installation state information D40 from the plurality of cameras 100 (step S201). For example, the controller 240 acquires the moving object group information D30 and the installation state information D40 on the same day and during the same time zone received from the plurality of cameras 100 via the communicator 220, and stores them in the storage 230 in association with each other. When the processing of step S201 ends, the controller 240 advances the process to step S202.

The controller 240 compares the plurality of moving object groups 3000 (step S202). For example, the controller 240 inputs the plurality of pieces of moving object group information D30 to the determination model M2, and stores the output of the determination model M2 in the storage 230 as a determination result as to whether the plurality of pieces of the moving object group information D30 are of the same moving object group 3000. For example, the controller 240 may compare the plurality of pieces of the moving object group information D30 without using the determination model M2, and determines whether the moving object groups 3000 are the same moving object group 3000. When the processing of step S202 ends, the controller 240 advances the process to step S203.

The controller 240 determines whether the moving object groups 3000 are the same moving object group 3000 based on the comparison result in step S202 (step S203). When it is determined that the plurality of moving object groups 3000 captured by the plurality of cameras 100 are not the same moving object group 3000 (No in step S203), the controller 240 advances the process to step S206 which will be described later. When it is determined that the moving object groups 3000 are the same moving object group 3000 (Yes in step S203), the controller 240 advances the process to step S204.

The controller 240 estimates the installation relationship of the plurality of cameras 100 (step S204). For example, the controller 240 inputs the plurality of pieces of the moving object group information D30 determined to be the same moving object group 3000 and the installation state information D40 to the installation relationship estimation model M20. When the estimation result estimated by the installation relationship estimation model M20 is output, the controller 240 stores the estimation result in the storage 230 as the installation relationship of the plurality of cameras 100. When the processing of step S204 ends, the controller 240 advances the process to step S205.

The controller 240 outputs the installation relationship information D100 (step S205). For example, the controller 240 generates the installation relationship information D100 as illustrated in FIG. 4 based on the estimation result of step S205, and executes output processing of the installation relationship information D100. The output processing includes such processing as displaying the installation relationship information D100 on a display device or transmitting it to an electronic device external to the information processing apparatus. When the processing of step S205 ends, the controller 240 advances the process to step S206.

The controller 240 determines whether the number of processed moving object groups 3000 is equal to a predetermined number (step S206). For example, when the number of times the installation relationship of the plurality of cameras is estimated or the number of times the installation relationship information D100 is output reaches a predetermined number, the controller 240 determines that the number of processed moving object groups 3000 reaches the predetermined number. For example, as to the predetermined number, the number of times can be set so as to improve estimation accuracy. When it is determined that the number of the processed moving object groups 3000 is not the predetermined number (No in step S206), the controller 240 returns the process to step S201 whose processing is already described, and continues the process. When it is determined that the number of the processed moving object groups 3000 is the predetermined number (Yes in step S206), the controller 240 ends the processing procedure illustrated in FIG. 9.

### Example of Operation of Camera System

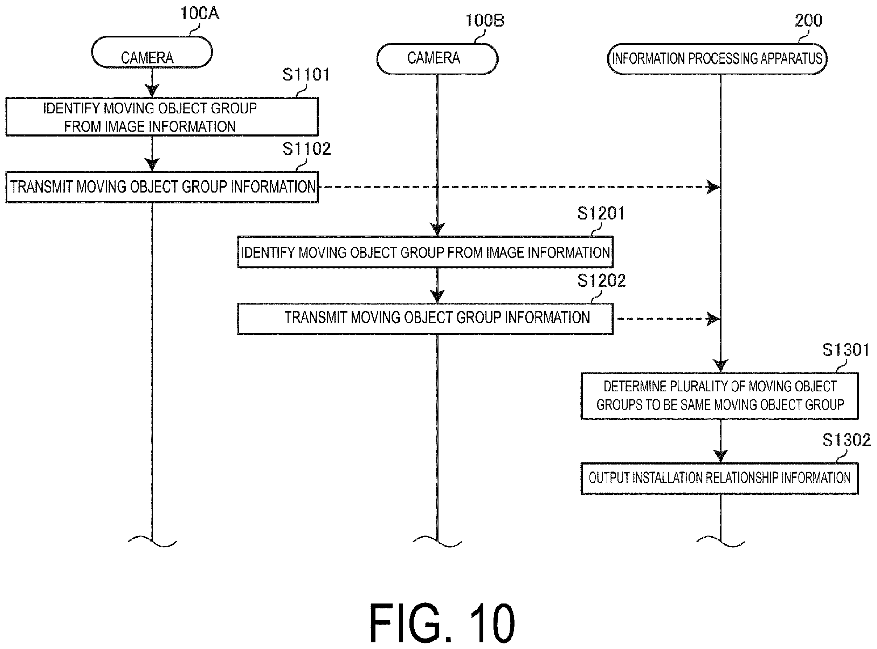

FIG. 10 illustrates an example of the operation of the cameras 100 and the information processing apparatus 200 in the camera system 1. In the example illustrated in FIG. 10, it is assumed that the first camera 100A and the second camera 100B are installed so as to capture images of different image capturing areas of the same road 1100 in the same movement direction 1100M, as illustrated in FIG. 1.

As illustrated in FIG. 10, when the image of the plurality of moving objects 2000 moving in the image capturing area of the first camera 100A is captured, the first camera 100A identifies the moving object group 3000 from the image information D10 (step S1101). When the moving object group 3000 is identified, the first camera 100A transmits the moving object group information D30 via the communicator 130 (step S1102). In the present embodiment, the first camera 100A transmits the moving object group information D30 and the installation state information D40 to the information processing apparatus 200.

When the plurality of moving objects 2000 captured by the first camera 100A move in the movement direction 1100M, they enter the image capturing area of the second camera 100B.

When the image of the plurality of moving objects 2000 that move in the image capturing area of the second camera 100B is captured, the second camera 100B identifies the moving object group 3000 from the image information D10 (step S1201). When the moving object group 3000 is identified, the second camera 100B transmits the moving object group information D30 via the communicator 130 (step S1202). In the present embodiment, the second camera 100B transmits the moving object group information D30 and the installation state information D40 to the information processing apparatus 200.

When the moving object group information D30 is received from the first camera 100A and then the moving object group information D30 is received from the second camera 100B, the information processing apparatus 200 determines whether the plurality of moving object groups 3000 are the same moving object group 3000 based on the moving object group information D30. Then, the information processing apparatus 200 determines that the plurality of moving object groups 3000 are the same moving object group 3000 (step S1301). The information processing apparatus 200 estimates the installation relationship information D100 and outputs the installation relationship information D100 (step S1302).

Accordingly, the information processing apparatus 200 can output the installation relationship information D100 based on how the moving object group 3000 indicated by the image information D10 captured by the plurality of cameras 100 appears. Even when the installation locations of the first camera 100A and the second camera 100B are separated from each other, the information processing apparatus 200 can output the installation relationship information D100 based on how the moving object group 3000 appears. As a result, even when a plurality of cameras are installed in the vicinity of the road 1100, the information processing apparatus 200 can support the estimation of the installation state of the plurality of cameras 100 capturing the images of the traffic environment 1000 without requiring manual labor or traffic regulation. The information processing apparatus 200 can also perform calibrations for obtaining the installation state of the camera 100 without using a jig or labor even when a plurality of cameras are installed.

Subsequently, each time the first camera 100A and the second camera 100B capture the image of the moving object group 3000, the moving object group information D30 is transmitted to the information processing apparatus 200. Then, the information processing apparatus 200 outputs the installation relationship information D100 each time it is determined that the plurality of moving object groups 3000 are the same moving object group 3000. Thus, the information processing apparatus 200 can improve the estimation accuracy of the installation relationship by estimating the installation relationship among the plurality of cameras 100 each time the plurality of different moving object groups 3000 pass the first camera 100A and the second camera 100B.

The information processing apparatus 200 ends the operation when the determined number of the moving object groups 3000 reaches and exceeds the predetermined number. This allows the information processing apparatus 200 to appropriately end the estimation of the installation relationship among the plurality of cameras 100.

The information processing apparatus 200 can determine whether the moving object groups 3000 are the same moving object group 3000 based on at least one of the type, the arrangement (driving order), the color, the movement direction, the arrangement, and the device position of the moving objects 2000 included in the moving object groups 3000. This allows the information processing apparatus 200 to correctly identify the plurality of moving object groups 3000, thereby improving the determination accuracy of whether the moving object groups 3000 are the same moving object group 3000. For example, the information processing apparatus 200 can more precisely identify the plurality of moving object groups 3000 even when the plurality of cameras 100 are located at different positions by focusing on the moving object groups 3000 composed of combinations of the moving objects 2000 of different types, colors, or the like.

In the information processing apparatus 200, the outputter 243 can output the statistical installation relationship information D100 based on the time-series information of the first moving object group and the time-series information of the second moving object group. For example, the information processing apparatus 200 can contribute to grasping the moving state of the moving object groups 3000, the distance between the cameras 100, and the like by outputting the installation relationship information D100 in which the date and time or the like of capturing the image of the moving object groups 3000 is associated with the camera 100 for each of the plurality of cameras 100.

The information processing apparatus 200 may express whether the moving object group 3000 is easy to use as the value of the group itself in the estimation of the positional relationship of the plurality of cameras 100. For example, the information processing apparatus 200 can set the score such that the value of the moving object group 3000 increases as the number of the moving objects 2000 and the number of types of the moving objects in the moving object group 3000 increase. Accordingly, the information processing apparatus 200 does not use the moving object groups 3000 having a low score for the determination, thereby improving the determination accuracy of whether the moving object groups 3000 are the same moving object group 3000.

The acquirer 241 of the information processing apparatus 200 can acquire the first moving object group information and the second moving object group information from the plurality of cameras 100 installed so that the image capturing areas do not overlap. Accordingly, the information processing apparatus 200 can output the installation relationship information D 100 of the cameras 100 installed in a wide range of the road 1100, thus improving the maintenance and the like of the plurality of cameras 100.

### Other Embodiments

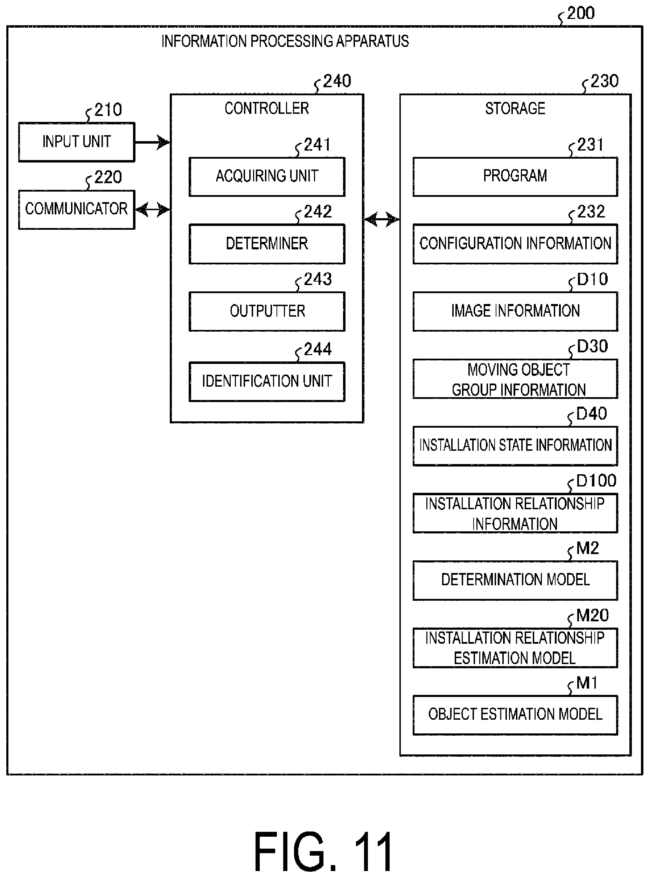

FIG. 11 illustrates an example of another configuration of the information processing apparatus 200 according to the embodiment. As illustrated in FIG. 11, the information processing apparatus 200 includes the input unit 210, the communicator 220, the storage 230, and the controller 240 as described above. The controller 240 may be configured to include the acquirer 241, the determiner 242, and the outputter 243 as described above, and may also include an identification unit 244.

In this case, the acquirer 241 described above may be configured to have a function of acquiring the image information D10 from the plurality of cameras 100. The storage 230 may be configured to store the object estimation model M1 described above.

The identification unit 244 identifies the moving object group 3000 including one or more moving objects 2000 from the image information D10 using the object estimation model M1, the object identification program, or the like described above. The identification unit 244 identifies the movement direction of the moving object group 3000, the origin (center) of the moving object group 3000, and the like based on the presence or absence, the type, the color, the movement direction, the arrangement, the relative position, the score, and the like of the moving objects 2000. The identification unit 244 generates the moving object group information D30 that can identify the identified moving object group 3000, and stores the moving object group information D30 in the storage 230 in association with the camera 100.

The determiner 242 described above may be configured to have a function of determining whether the plurality of moving object groups 3000 identified by the identification unit 244 are the same moving object group 3000.

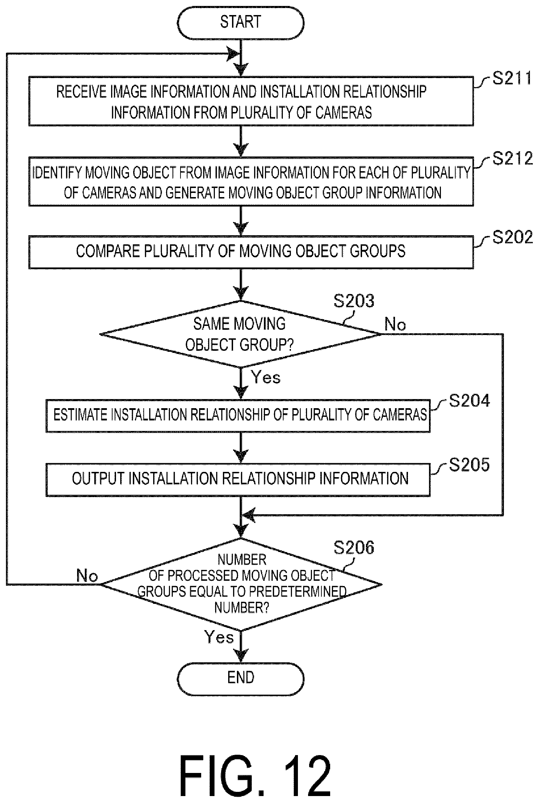

FIG. 12 is a flowchart illustrating an example of a processing procedure executed by the information processing apparatus 200. The processing procedure illustrated in FIG. 12 is a processing procedure that is partially changed from the processing procedure illustrated in FIG. 9. The processing procedure illustrated in FIG. 12 is executed repeatedly by the controller 240.

As illustrated in FIG. 12, the controller 240 of the information processing apparatus 200 acquires the image information D10 and the installation state information D40 from the plurality of cameras 100 (step S211). For example, the controller 240 acquires the image information D10 and the installation state information D40 on the same day and during the same time zone received from the plurality of cameras 100 via the communicator 220, and associates and stores them in the storage 230. When the processing of step S211 ends, the controller 240 advances the process to step S212.

The controller 240 identifies the moving object 2000 from the image information D10 and generates the moving object group information D30 for each of the plurality of cameras 100 (step S212). For example, the controller 240 inputs the image information D10 to the object estimation model M1, and identifies the moving object 2000 indicated by the image information D10 based on the output of the object estimation model M1. Based on the identification result of the plurality of identified moving objects 2000, the controller 240 generates the moving object group information D30 that can identify information such as the type, the color, the movement direction, and the like of the moving object 2000, and the movement direction, the color, the arrangement device position, the score, and the like of the moving object group 3000. When the generated moving object group information D30, the image information D10, and the installation state information D40 are associated with each other and stored in the storage 230, the controller 240 advances the process to step S202 that has already been described. Then, the controller 240 executes the processing from step S202 to step S206. The processing from step S202 to step S206 is the same as the processing from step S202 to step S206 illustrated in FIG. 9, and thus detailed description thereof is omitted.

As described above, the information processing apparatus 200 according to another embodiment can output the installation relationship information D100 based on how the moving object group 3000 indicated by the image information D10 acquired from the plurality of cameras 100 appears. Even when the plurality of cameras 100 are separated from each other, the information processing apparatus 200 can output the installation relationship information D100 based on how the moving object group 3000 appears. As a result, even when a plurality of cameras are installed in the vicinity of the road 1100, the information processing apparatus 200 can support the estimation of the installation state of the plurality of cameras 100 capturing the images of the traffic environment 1000 without requiring manual labor or traffic regulation.

The information processing apparatus 200 described above has been described for, but is not limited to, a case in which it is installed outside the plurality of cameras 100. For example, the information processing apparatus 200 may be incorporated in any one of the plurality of cameras 100 and may be implemented as the controller 150, a module, or the like of the camera 100. For example, the information processing apparatus 200 may be incorporated in traffic signals, lighting devices, communication devices, or the like installed in the traffic environment 1000.

The above-described information processing apparatus 200 may be implemented as a server device or the like. For example, the information processing apparatus 200 can be a server device that acquires the image information D 10 from each of the plurality of cameras 100, estimates the installation state parameters from the image information D10, and provides the estimation result.

The learning device 300 described above is not limited to the case of generating the object estimation model M1, the determination model M2, the state estimation model M10, and the installation relationship estimation model M20. For example, the learning device 300 may be implemented in a manner incorporated in the information processing apparatus 200.

The present disclosure may be an example in which the object estimation model M1, the determination model M2, the state estimation model M10, and the installation relationship estimation model M20 are implemented as separate models and separate learning units, and may also be an example in which a plurality of models are combined to be an integrated model to which the machine-learning is also integrated as one machine-learning unit.

Characteristic embodiments have been described in order to fully and clearly disclose the technology according to the appended claims. However, the appended claims should not be limited to the above-described embodiments, and should be configured to embody all variations and alternative configurations that can be created by those skilled in the art within the scope of the basic matters indicated in the present specification.

### Supplementary Note 1

An information processing apparatus includes
a first identification unit configured to identify a first moving object group including at least a moving object from a first image captured by a first camera,
a second identification unit configured to identify a second moving object group including at least the moving object from a second image captured by a second camera,
a determiner configured to determine whether the first moving object group and the second moving object group are an identical moving object group, and
an outputter configured to output installation relationship information identifying an installation relationship between the first camera and the second camera based on a movement mode of the first moving object group and a movement mode of the second moving object group determined to be the identical moving object group.

### Supplementary Note 2

A camera system includes
a plurality of cameras, and
an information processing apparatus configured to communicate with the plurality of cameras, in which the information processing apparatus includes
a determiner configured to determine whether a first moving object group identified from a first image captured by a first camera and a second moving object group identified from a second image captured by a second camera are an identical moving object group, and
an outputter configured to output installation relationship information identifying an installation relationship between the first camera and the second camera based on a movement mode of the first moving object group and a movement mode of the second moving object group determined to be the identical moving object group.

### REFERENCE SIGNS

1 Camera system
100 Camera
100A First camera
100B Second camera
110 Imager
120 Sensor unit
130 Communicator
140 Storage
141 Program
150 Controller
151 Image recognition unit
152 Identification unit
153 Estimator
154 Transmitter
200 Information processing apparatus
210 Input unit
220 Communicator
230 Storage
231 Program
232 Configuration information
240 Controller
241 Acquirer
242 Determiner
243 Outputter
244 Identification unit
300 Learning device
310 Display
320 Operator
330 Communicator
340 Storage
341 Program
342 Teaching information
350 Controller
351 First acquirer
352 First machine-learning unit
353 Second acquirer
354 Second machine-learning unit
355 Third acquirer
356 Third machine-learning unit
357 Fourth acquirer
358 Fourth machine-learning unit
1000 Traffic environment
1100 Road
2000 Moving object
3000 Moving object group
3100 First moving object group
3200 Second moving object group
D10 Image information
D30 Moving object group information
D40 Installation state information
D100 Installation relationship information
M1 Object estimation model
M2 Determination model
M10 State estimation model
M20 Installation relationship estimation model

## Claims

1. An information processing apparatus, comprising:
a determiner configured to determine whether a first moving object group identified from a first image captured by a first camera and a second moving object group identified from a second image captured by a second camera are an identical moving object group; and
an outputter configured to output installation relationship information identifying an installation relationship between the first camera and the second camera based on a movement mode of the first moving object group and a movement mode of the second moving object group determined to be the identical moving object group.

2. The information processing apparatus according to claim **1,** further comprising:
an acquirer configured to acquire first moving object group information indicating the first moving object group comprising at least one moving object identified from the first image, and to acquire second moving object group information indicating the second moving object group comprising at least one moving object from the second image,
wherein the determiner determines whether the first moving object group indicated by the first moving object group information and the second moving object group indicated by the second moving object group information are an identical moving object group.

3. The information processing apparatus according to claim 2, wherein
the determiner determines
a first movement direction as the movement mode of the first moving object group, and
a second movement direction as the movement mode of the second moving object group, and
the outputter outputs
the installation relationship information identifying the installation relationship between the first camera and the second camera based on the first movement direction and the second movement direction.

4. The information processing apparatus according to claim 3, wherein
the determiner determines
whether the first moving object group and the second moving object group are an identical moving object group based on type information of the moving object of the first moving object group and type information of the moving object of the second moving object group.

5. The information processing apparatus according to claim 4, wherein
the determiner determines
whether the first moving object group and the second moving object group are an identical moving object group based on the type information of the first moving object group and installation information of the moving object of the first moving object group, and the type information of the second moving object group and installation information of the moving object of the second moving object group.

6. The information processing apparatus according to claim 4, wherein
the determiner determines
whether the first moving object group and the second moving object group are an identical moving object group based on the type information of the first moving object group and color information of the moving object of the first moving object group, and the type information of the second moving object group and color information of the moving object of the second moving object group.

7. The information processing apparatus according to claim 4, wherein
the determiner determines
the type information of the moving object in the first moving object group based on a first size of each moving object relative to a size of the first moving object group, and
the type information of the moving object in the second moving object group based on a second size of each moving object relative to a size of the second moving object group.

8. The information processing apparatus according to any one of claims 4 to 7, wherein
the type information comprises at least a standard vehicle, a large vehicle, and a motorcycle.

9. The information processing apparatus according to claim 3, wherein
the determiner determines whether the first moving object group and the second moving object group are an identical moving object group based on a first relative position of each moving object with respect to a center of gravity of the first moving object group as an origin, and a second relative position of each moving object with respect to a center of gravity of the second moving object group as an origin.

10. The information processing apparatus according to claim 2, wherein
the outputter is configured to output the installation relationship information that is statistical, based on time-series information of the first moving object group and time-series information of the second moving object group.

11. The information processing apparatus according to claim 10, wherein
the outputter is configured to output the installation relationship information identifying a score of the first moving object group and a score of the second moving object group.

12. The information processing apparatus according to claim 11, wherein
the outputter is configured to output the installation relationship information identifying the score that increases as the number of the moving objects or the number of pieces of the type information of the moving objects in the moving object group increases.

13. The information processing apparatus according to claim 11, wherein
the determiner determines whether the first moving object group indicated by the first moving object group information and the second moving object group indicated by the second moving object group information are an identical moving object group when the score of the first moving object group and the score of the second moving object group satisfy a determination condition.

14. The information processing apparatus according to claim 1, wherein
the outputter is configured to end operation when the number of the moving object groups determined reaches or exceeds a predetermined number.

15. The information processing apparatus according to claim 1, wherein
the outputter is configured to output the installation relationship information identifying a mutual relationship of the first camera and the second camera.

16. The information processing apparatus according to claim 2, wherein
the acquirer is configured to acquire the first moving object group information and the second moving object group information from the first camera and the second camera, respectively, that are installed in a manner that image capturing areas do not overlap.

17. An information processing method comprising:
by a computer,
determining whether a first moving object group identified from a first image captured by a first camera and a second moving object group identified from a second image captured by a second camera are an identical moving object group; and
outputting installation relationship information identifying an installation relationship between the first camera and the second camera based on a movement mode of the first moving object group and a movement mode of the second moving object group determined to be the identical moving object group.

18. An information processing program causing a computer to implement:
determining whether a first moving object group identified from a first image captured by a first camera and a second moving object group identified from a second image captured by a second camera are an identical moving object group; and
outputting installation relationship information identifying an installation relationship between the first camera and the second camera based on a movement mode of the first moving object group and a movement mode of the second moving object group determined to be the identical moving object group.
